# EUROPÄISCHE PATENTSCHRIFT

(11) **EP 0 812 653 B1**
(45) Veröffentlichungstag und Bekanntmachung des Hinweises auf die Patenterteilung: **06.02.2002**
(21) Anmeldenummer: 97103796.5
(22) Anmeldetag: 07.03.1997
(51) Int. Cl.: B23Q 1/52, B23Q 7/04

(54) **Verfahren zum Betreiben einer Werkzeugmaschine**
Method of operating a machine-tool
Méthode d'entraînement d'une machine-outil

(30) Priorität: 12.06.1996 DE 19623422
(43) Veröffentlichungstag der Anmeldung: 17.12.1997
(73) Patentinhaber: CHIRON-WERKE GMBH & CO. KG, 78532 Tuttlingen (DE)
(72) Erfinder: Schweizer, Anton, 78573 Wurmlingen (DE)
(74) Vertreter: Otten, Hajo, Dr.-Ing.

(56) Entgegenhaltungen:
- EP-A- 0 712 683
- DE-A- 3 544 174
- DE-A- 3 620 343
- FR-A- 2 585 276
- US-A- 4 555 844
- US-A- 4 571 814

## Beschreibung

Die vorliegende Erfindung betrifft ein Verfahren zum Betreiben einer Werkzeugmaschine, die eine um eine Spindelachse drehbare Spindel, einen von der Spindel getragenen Spindelgreifer zum Ergreifen von Werkstücken sowie eine Wiegenvorrichtung umfaßt, in die zu bearbeitende Werkstücke eingespannt werden, die um eine etwa quer zu der Spindelachse verlaufende Schwenkachse der Wiegenvorrichtung hin- und herschwenkbar sind.

Eine derartige Werkzeugmaschine, wie sie aus der US 4,571,814 A bekannt ist, wird z. Zt. in den der Öffentlichkeit nicht zugänglichen Räumen der Anmelderin konzipiert.

Die Wiegen- oder auch Schwenkvorrichtung dient dazu, Werkzeuge so einzuspannen, daß sie nicht nur in einer waagerechten Stellung sondern auch in zwei um jeweils ca. 90° verschwenkten, senkrechten Stellungen von in der Spindel eingespannten Werkzeugen bearbeitet werden können. Die Wiegenvorrichtung stellt damit sozusagen eine weitere Maschinenachse bereit.

Mit der insoweit beschriebenen Werkzeugmaschine ist es möglich, Werkstücke in einer Aufspannung nicht nur an ihrer Oberseite sondern auch noch an den beiden Seitenflächen zu bearbeiten. Die Werkstücke können dabei in drei jeweils um 90° zueinander verschwenkten Stellungen oder aber auch in Zwischenstellungen gehalten werden. Für die Bearbeitung nicht zugänglich sind die Stirnflächen der Werkstücke, an denen Spannzangen einer auf der Wiegenvorrichtung angeordneten Aufspannvorrichtung angreifen, sowie die von der Oberseite abgelegene Unterseite der Werkstücke, die auf die Aufspannvorrichtung zu weist.

Eine aus der DE 36 20 343 C2 bekannte Werkzeugmaschine ist ferner mit einem Spindelgreifer versehen, der zum Transportieren von Werkstücken auf dem Werkstücktisch zwischen einer Palette mit vorrätig gehaltenen Werkstücken sowie einer Aufspannvorrichtung dient. Der Spindelgreifer wird dabei z.B. wie ein übliches Werkzeug in die Spindel ein- bzw. ausgewechselt.

Aus der DE 36 20 343 C2 ist es ferner bekannt, den Spindelgreifer drehbar auszuführen, indem er z.B. mit einem fremdkraftbetätigten Drehantrieb versehen wird. Dieser Drehantrieb kann z.B. über Fluide oder elektrischen Strom angesteuert werden, wobei die Fluid- und/oder Stromversorgung durch die Spindel selbst hindurch erfolgen kann. Derartige drehbare Spindelgreifer dienen zum lagerichtigen Zustellen von Werkstücken zu fest auf dem Werkstücktisch installierten Werkzeugen oder zum lagerichtigen Ablegen der bearbeiteten Werkzeuge auf einer zweiten Palette.

Wenn bei der erwähnten Werkzeugmaschine auch die Unterseite und/oder die Stirnflächen der Werkstücke bearbeitet werden sollen, müssen die Werkstücke dazu umgespannt werden. Dies erfolgt entweder von Hand oder aber mit einem zusätzlichen Handlinggerät z.B. in Form eines Roboterarmes.

Beim Umspannen von Hand ist von Nachteil, daß die erforderliche Werkstückumspannzeit relativ groß ist. Ein weiterer Nachteil besteht darin, daß das Umspannen von Hand eine gewisse Ungenauigkeit mit sich bringt, so daß die lagerichtige Zuordnung zwischen Bohrungen, die vor und nach dem Umspannen gesetzt wurden, häufig nicht eingehalten werden kann.

Die Verwendung eines zusätzlichen Handlinggerätes führt insgesamt zu einer Erhöhung der Maschinenkosten und weist den weiteren Nachteil auf, daß ein Teil der Fläche des Werkstücktisches durch dieses Handlinggerät eingenommen wird und somit für andere Aufgabe nicht mehr zur Verfügung steht. Ein weiterer Nachteil des Handlinggerätes liegt darin, daß Kollisionen zwischen dem Handlinggerät und der Spindel vermieden werden müssen, wozu eine umfangreiche Ergänzung der üblichen Maschinensteuerung erforderlich ist.

Vor diesem Hintergrund ist es Aufgabe der vorliegenden Erfindung, ein Verfahren von der eingangs genannten Art zu schaffen, um mit möglichst geringen konstruktiven Änderungen an einer Werkzeugmaschine zu bearbeitende Werkzeuge auf schnelle Weise so umspannen zu können, daß die Unterseite der Werkstücke der Bearbeitung zugänglich wird.

Bei dem eingangs genannten Verfahren wird diese Aufgabe erfindungsgemäß einerseits durch die folgenden Schritte gelöst:
a) Bereitstellen der Wiegenvorrichtung mit einem eingespannten Werkstück und in einer ersten Stellung,
b) Entnehmen des eingespannten Werkstückes mit dem Spindelgreifer aus der Wiegenvorrichtung und Halten des Werkstückes in dem Spindelgreifer,
c) Schwenken der leeren Wiegenvorrichtung in eine zweite Stellung,
d) Einsetzen des von dem Spindelgreifer gehaltenen Werkstückes in die Wiegenvorrichtung, und
e) Schwenken der Wiegenvorrichtung zur weiteren Bearbeitung des wieder eingespannten Werkstückes in eine weitere Stellung.

Andererseits wird die Aufgabe erfindungsgemäß gelöst durch die folgenden Schritte:
a) Bereitstellen der Wiegenvorrichtung mit einem eingespannten Werkstück und in einer ersten um ca. 90° aus ihrer waagerechten Stellung geschwenkten senkrechten Stellung,
b) Entnehmen des eingespannten Werkstückes mit dem Spindelgreifer aus der Wiegenvorrichtung und Halten des Werkstückes in dem Spindelgreifer,
c) Drehen des das Werkstück haltenden Spindelgreifers um die Spindelachse,
d) Einsetzen des von dem Spindelgreifer gehaltenen Werkstückes in die Wiegenvorrichtung, und
e) Schwenken der Wiegenvorrichtung zur weiteren Bearbeitung des wieder eingespannten Werkstückes in eine weitere Stellung.

Die der Erfindung zugrundeliegende Aufgabe wird auf diese Weise vollkommen gelöst.

Der Erfinder der vorliegenden Anmeldung hat nämlich erkannt, daß es durch die einfache Abfolge "Entnehmen-Schwenken und/oder Drehen-Einsetzen-Schwenken" möglich ist, das Werkstück so umzuspannen, daß seine Unterseite nach oben oder zur Seite zeigt und somit der Bearbeitung zugänglich ist. Von besonderem Vorteil ist bei diesem Verfahren, daß an der eingangs erwähnten Werkzeugmaschine keine konstruktiven Änderungen erforderlich sind. Ein weiterer Vorteil besteht darin, daß nur ganz geringfügige Änderungen bzw. Ergänzungen an der Ablaufsteuerung der erwähnten Werkzeugmaschine erforderlich sind, um das neue Verfahren zu implementieren. Weil bei dem neuen Verfahren das Umspannen der Werkstücke, also insbesondere das Entnehmen und Wiedereinsetzen der Werkstücke in die auf der Wiegenvorrichtung vorhandene Aufspannvorrichtung mittels des über die Spindel positionierten Spindelgreifers erfolgt, wird das Umspannen mit einer sehr hohen Genauigkeit durchgeführt, so daß die oben erwähnten Nachteile beseitigt sind.

Das Umspannen der Werkstücke erfolgt auch in sehr kurzer Zeit, neben der erforderlichen Werkzeugwechselzeit, um das zuvor benutzte Bearbeitungswerkzeug gegen den Spindelgreifer auszutauschen, sind nur noch die Zeiten zu berücksichtigen, in denen die Wiegenvorrichtung schwenkt und/oder der Spindelgreifer über den Spindelstock/die Spindel bewegt bzw. gedreht wird.

In einem Ausführungsbeispiel ist es bevorzugt, wenn die Wiegenvorrichtung im Schritt a) in einer um ca. 90° aus ihrer waagerechten Stellung geschwenkten senkrechten Stellung bereitgestellt wird, im Schritt c) um ca. 180° in ihre andere senkrechte Stellung geschwenkt wird, und im Schritt e) um 90° in die waagerechte Stellung zurückgeschwenkt wird.

Bei dieser Maßnahme ist von Vorteil, daß nach dem erfolgten Umspannen die Unterseite des Werkstückes nach oben zeigt, wenn die Wiegenvorrichtung sich wieder in ihrer waagerechten Stellung befindet. Das Werkzeug liegt jetzt also mit seiner ehemaligen Oberseite auf der Aufspannvorrichtung auf, so daß unabhängig von der Haltekraft der Aufspannvorrichtung das Werkstück beim Bearbeiten nicht nach unten rutscht. Ein weiterer Vorteil bei dieser Maßnahme liegt darin, daß kein drehbarer Spindelgreifer erforderlich ist.

In einem anderen Ausführungsbeispiel ist es bevorzugt, wenn im Schritt c) nicht die Wiegenvorrichtung geschwenkt sondern der Spindelgreifer um 180° gedreht wird.

Diese Maßnahme weist dieselben Vorteile auf wie bei dem oben beschriebenen Ausführungsbeispiel, wegen des jetzt jedoch vorgesehenen drehbaren Spindelgreifers erfolgt das Umspannen des Werkstückes erheblich schneller. Der Spindelgreifer läßt sich nämlich in erheblich kürzerer Zeit um 180° drehen als die Wiegenvorrichtung schwenken.

Andererseits ist es bevorzugt, wenn die Wiegenvorrichtung im Schritt a) in ihrer waagerechten Stellung bereitgestellt wird, im Schritt c) um ca. 90° in eine senkrechte Stellung geschwenkt wird, und im Schritt e) um 180° in ihre andere senkrechte Stellung geschwenkt wird. Zusätzlich kann im Schritt c) noch der Spindelgreifer um 90° gedreht werden.

Hier ist von Vorteil, daß nach dem erfolgten Umspannen die ehemalige Unterseite des Werkstückes in einer senkrechten Stellung der Wiegenvorrichtung nach oben zeigt, während in der waagerechten Stellung der Wiegenvorrichtung entweder eine der ursprünglichen Seitenflächen oder aber eine der ursprünglichen Stirnflächen nach oben zeigt. Ein Vorteil bei diesen Maßnahmen liegt also darin, daß zusätzlich zur Unterseite auch noch eine der ansonsten nicht zugänglichen Stirnflächen der Bearbeitung zugänglich gemacht wurden.

Insgesamt ist bei diesen Maßnahmen jedoch von Vorteil, daß entweder die neu zugänglich gemachte Stirnfläche oder aber die bereits zugängliche Seitenfläche nun so positioniert sind, daß sie in der waagerechten Stellung der Wiegenvorrichtung bearbeitet werden können, in der das Werkstück bei Druck von oben nicht nachrutschen kann.

Andererseits ist es bevorzugt, wenn die Wiegenvorrichtung im Schritt a) in einer um ca. 90° aus ihrer waagerechten Stellung geschwenkten senkrechten Stellung bereitgestellt wird, im Schritt c) um ca. 90° in ihre waagerechte Stellung zurückgeschwenkt wird, und im Schritt e) um 90° in ihre erste senkrechte Stellung zurückgeschwenkt wird.

Auch diese Maßnahme führt zu den oben bereits erwähnten Vorteilen, daß nämlich einerseits die Unterseite jetzt der Bearbeitung zugänglich ist und andererseits eine der ursprünglichen Seitenflächen in der waagerechten Stellung der Wiegenvorrichtung nach oben zeigt.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der beigefügten Zeichnung dargestellt und wird in der nachfolgenden Beschreibung näher erläutert. Es zeigen:
- Fig. 1: eine schematische Seitenansicht der Werkzeugmaschine, auf der das neue Verfahren durchgeführt wird;
- Fig. 2: eine Draufsicht auf die Wiegenvorrichtung der Werkzeugmaschine aus Fig. 1;
- Fig. 3: in einer schematischen Darstellung wie Fig. 2 den Ablauf des Umspannens eines Werkstückes in zwei alternativen Ausführungsbeispielen;
- Fig. 4: in einer Darstellung wie Fig. 3 ein weiteres Ausführungsbeispiel für das Umspannen eines Werkstückes; und
- Fig. 5: zwei weitere Ausführungsbeispiele für das Umspannen eines Werkstückes.

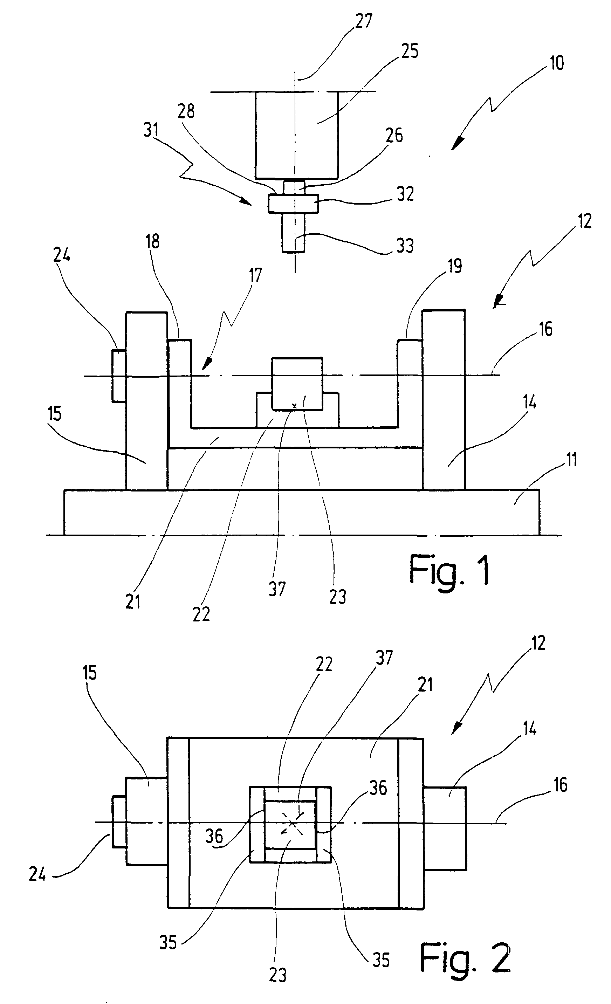

In Fig. 1 ist schematisch eine neue Werkzeugmaschine 10 gezeigt, die einen Werkstücktisch 11 umfaßt, auf dem eine Wiegenvorrichtung 12 angeordnet ist. Die Wiegenvorrichtung 12 umfaßt in an sich bekannter Weise zwei voneinander beabstandete Ständer 14, 15, zwischen denen um eine bei 16 angedeutete Schwenkachse schwenkbar ein U-förmiger Halter 17 gelagert ist.

Der U-förmige Halter 17 umfaßt zwei Schenkel 18, 19, über die die Lagerung an den Ständern 14, 15 erfolgt. Zwischen den Schenkeln 18, 19 erstreckt sich eine Wiegenplatte 21, auf der eine Aufspannvorrichtung 22 für zu bearbeitende Werkstücke 23 angeordnet ist. An dem Ständer 15 ist noch ein Antrieb 24 zu erkennen, über den der U-förmige Halter 17 um die Schwenkachse 16 aus der in Fig. 1 gezeigten waagerechten Stellung um ± 90° in eine seiner beiden senkrechten Stellungen geschwenkt werden kann. Selbstverständlich ist es auch möglich, den U-förmigen Halter 17 in beliebige Zwischenstellungen zu verschwenken.

Oberhalb der Wiegenvorrichtung 12 ist schematisch ein in bekannter Weise relativ zu dem Werkstücktisch 11 in drei Koordinatenrichtungen verfahrbarer Spindelstock 25 angedeutet, in dem eine Spindel 26 um ihre Spindelachse 27 drehbar gelagert ist. Die Spindelachse 27 verläuft senkrecht zu der Schwenkachse 16.

Die Spindel 26 ist an ihrem unteren Ende 28 in bekannter Weise dazu ausgelegt, standardisierte Werkzeughalter aufzunehmen.

In dem in Fig. 1 gezeigten Zustand befindet sich ein Spindelgreifer 31 an der Spindel 26. Dieser Spindelgreifer 31 ist um die Spindelachse 27 drehbar, wozu hier ein Greiferantrieb 32 vorgesehen ist, an dem Greiferbacken 33 befestigt sind. Der Greiferantrieb 32 dient zum einen zum Verstellen der Greiferbacken 33 und zum anderen zum Drehen der Greiferbacken um die Spindelachse 27. Die erforderliche Energiezufuhr sowie Steuerung des Greiferantriebes 32 erfolgt durch die Spindel 26 hindurch, wie es aus der DE 36 20 343 C2 bekannt ist.

Fig. 2 zeigt eine schematische Draufsicht auf die Wiegenvorrichtung 12 aus Fig. 1. Es ist zu erkennen, daß die Aufspannvorrichtung 22 zwei Spannzangen 35 umfaßt, die das Werkstück 23 an seinen Stirnflächen 36 ergreifen.

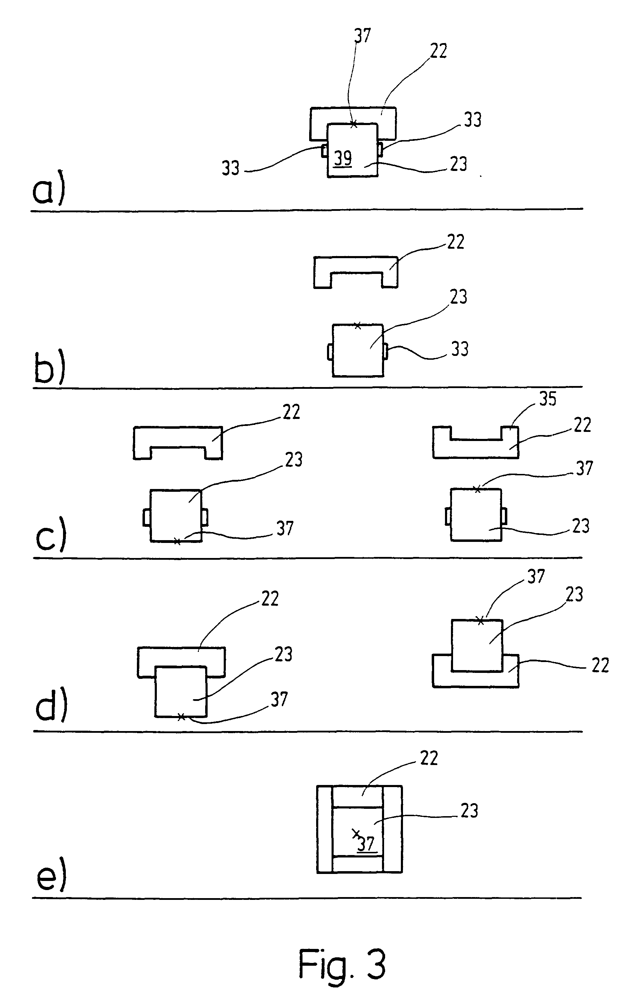

Die Werkzeugmaschine 10 zeichnet sich dadurch aus, daß zusätzlich zu der Wiegenvorrichtung 12 ein Spindelgreifer 31 vorgesehen ist, der hier sogar noch drehbar ist. Durch die Kombination von vorzugsweise drehbarem Spindelgreifer 31 sowie Wiegenvorrichtung 12 läßt sich jetzt auf überraschende Weise das Werkstück 22 so umspannen, daß seine in Fig. 1 durch ein Kreuz schematisch angedeutete Unterseite 37 der Bearbeitung zugänglich wird. Wie dies geschieht, wird jetzt anhand der schematischen Ablaufdiagramme der Fig. 3 bis 5 gezeigt.

Fig. 3 zeigt in einer schematischen Abfolge und in einer Ansicht wie Fig. 2 eine Draufsicht auf die von der Wiegenvorrichtung 12 verschwenkte Aufspannvorrichtung 22 mit aufgenommenem Werkstück 23.

Im Schritt a) befindet sich die Wiegenvorrichtung in ihrer um 90° gegenüber ihrer waagerechten Stellung aus Fig. 1 und 2 geschwenkten ersten senkrechten Stellung, wo das Werkstück 23 mit einer seiner Seitenflächen 39 nach oben zeigt.

Im Schritt b) hat der Spindelgreifer 31 mit seinen Greiferbacken 33 das Werkstück 23 ergriffen und aus der Aufspannvorrichtung 22 entnommen.

Im Schritt c) ist im linken Bild der Zustand dargestellt, bei dem der Spindelgreifer das Werkstück 23 um die Spindelachse so gedreht hat, daß es mit seiner Unterseite 37 jetzt von der Aufspannvorrichtung 22 weg zeigt.

Alternativ kann im Schritt c) auch die Aufspannvorrichtung 22 über die Wiegenvorrichtung 12 um 180° geschwenkt werden, so daß die Spannzangen 35 zunächst von dem Werkstück 23 weg zeigen.

Im Schritt d) hat der Spindelgreifer das Werkstück 23 wieder in die Aufspannvorrichtung 22 eingesetzt, wobei jetzt die ehemalige Unterseite 37 des Werkstückes 23 in Fig. 3 nach oben bzw. nach unten zeigt.

Im Schritt e) wurde die Aufspannvorrichtung 22 wieder in ihre waagerechte Stellung geschwenkt, so daß die Unterseite 37 des Werkstückes 23 jetzt von oben zugänglich ist.

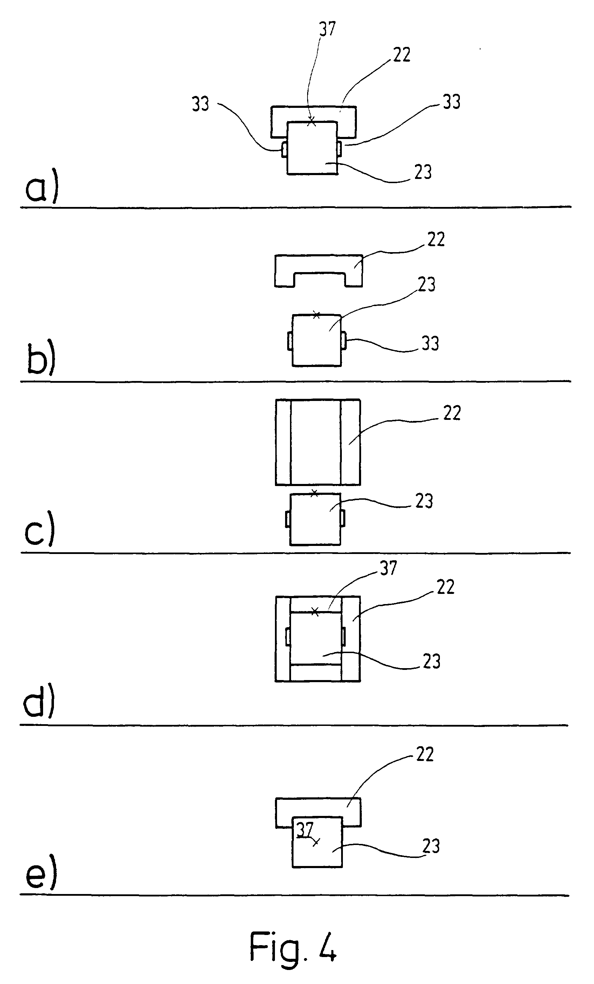

In Fig. 4 ist ein weiteres Ausführungsbeispiel für das Umspannen des Werkstückes 23 gezeigt.

Im Schritt a) wird das Werkstück 23 wieder so bereitgestellt, wie dies bereits im Schritt a) der Fig. 3 beschrieben wurde. Im Schritt b) erfolgt wieder die Entnahme des Werkstückes 23 mittels des Spindelgreifers aus der Aufspannvorrichtung 22.

Im Schritt c) wurde jetzt die Aufspannvorrichtung 22 über die Wiegenvorrichtung um 90° zurück in ihre waagerechte Stellung gedreht, woraufhin im Schritt d) das Werkstück 23 wieder in die Aufspannvorrichtung 22 eingesetzt wurde.

Nach dem erneuten Schwenken der Aufspannvorrichtung 22 in ihre erste senkrechte Stellung im Schritt e) zeigt das Werkstück 23 jetzt mit seiner ehemaligen Unterseite 37 nach oben und ist der Bearbeitung zugänglich.

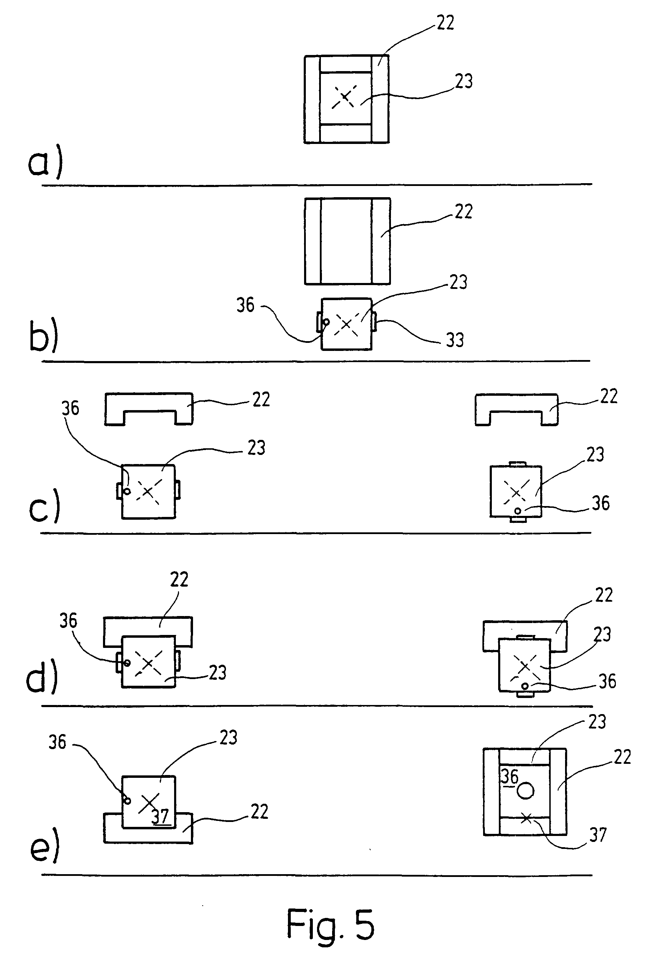

In Fig. 5 sind in vergleichbaren Darstellungen zu den Fig. 3 und 4 zwei weitere Ausführungsbeispiele für das Umspannen des Werkstückes 23 gezeigt.

Im Schritt a) wird die Aufspannvorrichtung 22 über die Wiegenvorrichtung in ihrer waagerechten Stellung bereitgestellt, in der also das Werkstück 23 mit seiner Unterseite 37 nach unten zeigt. Im Schritt b) wurde das Werkstück 23 wieder über den Spindelgreifer, von dem in Fig. 5 lediglich die Greiferbacken 33 angedeutet sind, aus der Aufspannvorrichtung 22 entnommen.

Im Schritt c) wurde die Aufspannvorrichtung 22 wieder in ihre senkrechte Stellung geschwenkt, wobei in dem rechten Bild zusätzlich noch der Spindelgreifer um 90° gedreht wurde, so daß das Werkstück 23 jetzt mit seiner ehemaligen Stirnseite 36 nach vorne zeigt.

Im Schritt d) wird das Werkstück 23 über den Spindelgreifer wieder in die Aufspannvorrichtung 22 eingeführt, woraufhin die Aufspannvorrichtung 22 im Schritt e) dann in Fig. 5 links um 180° und rechts um 90° geschwenkt wird.

In dem linken Ausführungsbeispiel der Fig. 5 steht nach Ausführung des Schrittes e) die Wiegenvorrichtung 12 in einer senkrechten Stellung und hält das Werkstück 23 mit seiner ehemaligen Unterseite 37 nach oben weisend.

In dem rechten Ausführungsbeispiel der Fig. 5 befindet sich die Aufspannvorrichtung 22 nach Ausführung des Schrittes e) in ihrer waagerechten Stellung, in der jetzt das Werkstück 23 mit seiner ehemaligen Stirnseite 36 nach oben zeigt. Die ehemalige Unterseite 37 wird der Bearbeitung dadurch zugänglich, daß die Wiegenvorrichtung die Aufspannvorrichtung 22 um 90° verschwenkt.

## Patentansprüche

1. Verfahren zum Betreiben einer Werkzeugmaschine (10), die eine um eine Spindelachse (27) drehbare Spindel (26), einen von der Spindel (26) getragenen Spindelgreifer (31) zum Ergreifen von Werkstücken (23) sowie eine Wiegenvorrichtung (12) umfaßt, in die zu bearbeitende Werkstücke (23) eingespannt werden, die um eine etwa quer zu der Spindelachse (26) verlaufende Schwenkachse (16) der Wiegenvorrichtung (12) hin- und herschwenkbar sind, mit den Schritten:
a) Bereitstellen der Wiegenvorrichtung (12) mit einem eingespannten Werkstück (23) und in einer ersten Stellung,
b) Entnehmen des eingespannten Werkstückes (23) mit dem Spindelgreifer (31) aus der Wiegenvorrichtung (12) und Halten des Werkstückes (23) in dem Spindelgreifer (31),
c) Schwenken der leeren Wiegenvorrichtung (12) in eine zweite Stellung,
d) Einsetzen des von dem Spindelgreifer (31) gehaltenen Werkstückes (23) in die Wiegenvorrichtung (12), und
e) Schwenken der Wiegenvorrichtung (12) zur weiteren Bearbeitung des wieder eingespannten Werkstückes (23) in eine weitere Stellung.

2. Verfahren zum Betreiben einer Werkzeugmaschine (10), die eine um eine Spindelachse (27) drehbare Spindel (26), einen von der Spindel (26) getragenen Spindelgreifer (31) zum Ergreifen von Werkstücken (23) sowie eine Wiegenvorrichtung (12) umfaßt, in die zu bearbeitende Werkstücke (23) eingespannt werden, die um eine etwa quer zu der Spindelachse (26) verlaufende Schwenkachse (16) der Wiegenvorrichtung (12) hin- und herschwenkbar sind, mit den Schritten:
a) Bereitstellen der Wiegenvorrichtung (12) mit einem eingespannten Werkstück (23) und in einer ersten um ca. 90° aus ihrer waagerechten Stellung geschwenkten senkrechten Stellung,
b) Entnehmen des eingespannten Werkstückes (23) mit dem Spindelgreifer (31) aus der Wiegenvorrichtung (12) und Halten des Werkstückes (23) in dem Spindelgreifer (31),
c) Drehen des das Werkstück (23) haltenden Spindelgreifers (31) um die Spindelachse (27),
d) Einsetzen des von dem Spindelgreifer (31) gehaltenen Werkstückes (23) in die Wiegenvorrichtung (12), und
e) Schwenken der Wiegenvorrichtung (12) zur weiteren Bearbeitung des wieder eingespannten Werkstückes (23) in eine weitere Stellung.

3. Verfahren nach Anspruch 1, **dadurch gekennzeichnet, daß** im Schritt c) zusätzlich der das Werkstück (23) haltende Spindelgreifer (31) um die Spindelachse (27) gedreht wird.

4. Verfahren nach Anspruch 1, **dadurch gekennzeichnet, daß** die Wiegenvorrichtung (12) im Schritt a) in einer um ca. 90° aus ihrer waagerechten Stellung geschwenkten senkrechten Stellung bereitgestellt wird, im Schritt c) um ca. 180° in ihre andere senkrechte Stellung geschwenkt wird, und im Schritt e) um 90° in die waagerechte Stellung zurückgeschwenkt wird.

5. Verfahren nach Anspruch 2, **dadurch gekennzeichnet, daß** im Schritt c) der Spindelgreifer (31) um 180° gedreht wird, und im Schritt e) die Wiegenvorrichtung (12) wieder um 90° in die waagerechte Stellung zurückgeschwenkt wird.

6. Verfahren nach Anspruch 1 oder 3, **dadurch gekennzeichnet, daß** die Wiegenvorrichtung (12) im Schritt a) in ihrer waagerechten Stellung bereitgestellt wird, im Schritt c) um ca. 90° in eine senkrechte Stellung geschwenkt wird, und im Schritt e) um 180° in ihre andere senkrechte Stellung geschwenkt wird.

7. Verfahren nach Anspruch 1, **dadurch gekennzeichnet, daß** die Wiegenvorrichtung (12) im Schritt a) in einer um ca. 90° aus ihrer waagerechten Stellung geschwenkten senkrechten Stellung bereitgestellt wird, im Schritt c) um ca. 90° in ihre waagerechte Stellung zurückgeschwenkt wird, und im Schritt e) um 90° in ihre erste senkrechte Stellung zurückgeschwenkt wird.

8. Verfahren nach Anspruch 6, **dadurch gekennzeichnet, daß** im Schritt c) der Spindelgreifer (31) um 90° gedreht wird.

## Claims

1. A method for operating a machine tool (10) which comprises a spindle (26) rotatable about a spindle axis (27), a spindle gripper (31), carried by the spindle (26), for gripping workpieces (23), as well as a cradle apparatus (12) into which workpieces (23) to be machined can be clamped, which workpieces can be pivoted back and forth about a pivot axis (16) of the cradle apparatus (12) extending approximately perpendicular to the spindle axis (26), comprising the steps of:
a) providing the cradle apparatus (12) with a clamped workpiece (23) and in a first position,
b) remove the clamped workpiece (23) from the cradle apparatus (12) with the spindle gripper (31) and hold the workpiece (23) in the spindle gripper (31),
c) pivot the empty cradle apparatus (12) into a second position,
d) insert the workpiece (23), held by the spindle gripper (31), into the cradle apparatus (12), and
e) pivot the cradle apparatus (12) into a further position for further machining of the workpiece (23) that is once again clamped in.

2. A method for operating a machine tool (10) which comprises a spindle (26) rotatable about a spindle axis (27), a spindle gripper (31), carried by the spindle (26), for gripping workpieces (23), as well as a cradle apparatus (12) into which workpieces (23) to be machined can be clamped, which workpieces can be pivoted back and forth about a pivot axis (16) of the cradle apparatus (12) extending approximately perpendicular to the spindle axis (26), comprising the steps of:
a) providing the cradle apparatus (12) with a clamped workpiece (23) and in a first position that is pivoted approximately 90° out of its horizontal position,
b) remove the clamped workpiece (23) from the cradle apparatus (12) with the spindle gripper (31) and hold the workpiece (23) in the spindle gripper (31),
c) rotate the spindle gripper (31) holding the workpiece (23) about the spindle axis (27),
d) insert the workpiece (23), held by the spindle gripper (31), into the cradle apparatus (12), and
e) pivot the cradle apparatus (12) into a further position for further machining of the workpiece (23) that is once again clamped in.

3. The method of claim 1, **characterized in that** in step c) the spindle gripper (31) holding the workpiece (23) is additionally rotated about the spindle axis (27).

4. The method of claim 1, **characterized in that** the cradle apparatus (12) in step a) is provided in a vertical position pivoted approximately 90° out of its horizontal position, in step c) is pivoted approximately 180° into its other vertical position, and in step e) is pivoted 90° back into the horizontal position.

5. The method of claim 2, **characterized in that** in step c) the spindle gripper (31) is rotated 180°, and in step e) the cradle apparatus (12) is pivoted 90° back into the horizontal position.

6. The method of claim 1 or claim 3, **characterized in that** the cradle apparatus (12) in step a) is provided in its horizontal position, in step c) is pivoted approximately 90° into a vertical position, and in step e) is pivoted 180° into its other vertical position.

7. The method of claim 1, **characterized in that** the cradle apparatus (12) in step a) is provided in a vertical position pivoted approximately 90° from its horizontal position, in step c) is pivoted approximately 90° back into its horizontal position, and in step e) is pivoted 90° back into its first vertical position.

8. The method of claim 6, **characterized in that** in step c) the spindle gripper (31) is rotated 90°.

## Revendications

1. Procédé pour faire fonctionner une machine-outil (10) qui comprend une broche (26) pouvant tourner autour d'un axe de broche (27), une griffe de broche (31) supportée par la broche (26) pour saisir des pièces (23) ainsi qu'un dispositif à berceau (12) dans lequel les pièces (23) à usiner sont serrées et peuvent pivoter dans un sens et dans l'autre autour d'un axe de pivotement (16), s'étendant à peu près perpendiculairement à l'axe de broche (26), du dispositif à berceau (12), comportant les étapes suivantes :
a) préparation du dispositif à berceau (12) avec une pièce (23) serrée et dans une première position,
b) prélèvement de la pièce (23) serrée au moyen de la griffe de broche (31) du dispositif à berceau (12), et maintien de la pièce (23) dans la griffe de broche (31),
c) pivotement du dispositif à berceau (12) vide dans une deuxième position,
d) insertion de la pièce (23) maintenue par la griffe de broche (31) dans le dispositif à berceau (12), et
e) pivotement du dispositif à berceau (12) pour la poursuite de l'usinage de la pièce (23) à nouveau serrée, dans une autre position.

2. Procédé pour faire fonctionner une machine-outil (10) qui comprend une broche (26) pouvant tourner autour d'un axe de broche (27), une griffe de broche (31) supportée par la broche (26) pour saisir des pièces (23) ainsi qu'un dispositif à berceau (12) dans lequel les pièces (23) à usiner sont serrées et peuvent pivoter dans un sens et dans l'autre autour d'un axe de pivotement (16), s'étendant à peu près perpendiculairement à l'axe de broche (26), du dispositif à berceau (12), comportant les étapes suivantes :
a) préparation du dispositif à berceau (12) avec une pièce (23) serrée et dans une première position verticale, pivotée d'environ 90° à partir de sa position horizontale,
b) prélèvement de la pièce (23) serrée au moyen de la griffe de broche (31) du dispositif à berceau (12), et maintien de la pièce (23) dans la griffe de broche (31),
c) rotation de la griffe de broche (31), qui maintient la pièce (23), autour de l'axe de broche (27),
d) insertion de la pièce (23), maintenue par la griffe de broche (31), dans le dispositif à berceau (12), et
e) pivotement du dispositif à berceau (12) pour la poursuite de l'usinage de la pièce (23) à nouveau serrée, dans une autre position.

3. Procédé selon la revendication 1, **caractérisé en ce qu'**au cours de l'étape c) on fait en outre tourner la griffe de broche (31), qui maintient la pièce (23), autour de l'axe de broche (27).

4. Procédé selon la revendication 1, **caractérisé en ce que** le dispositif à berceau (12) est préparé au cours de l'étape a) dans une position verticale, pivotée d'environ 90° depuis sa position horizontale, au cours de l'étape c) il est pivoté d'environ 180° dans son autre position verticale et au cours de l'étape e) il est repivoté dans la position horizontale.

5. Procédé selon la revendication 2, **caractérisé en ce qu'**au cours de l'étape c) on fait tourner la griffe de broche (31) de 180°, et au cours de l'étape e) le dispositif à berceau (12) est repivoté de 90° dans la position horizontale.

6. Procédé selon la revendication 1 ou 3, **caractérisé en ce que** le dispositif à berceau (12) est préparé au cours de l'étape a) dans sa position horizontale, au cours de l'étape c) il est pivoté d'environ 90° dans une position verticale, et au cours de l'étape e) il est pivoté de 180° dans son autre position verticale.

7. Procédé selon la revendication 1, **caractérisé en ce qu'**au cours de l'étape a), le dispositif à berceau (12) est préparé dans une position verticale, pivoté d'environ 90° depuis sa position horizontale, au cours de l'étape c) il est repivoté d'environ 90° dans sa position horizontale et au cours de l'étape e) il est repivoté de 90° dans sa première position verticale.

8. Procédé selon la revendication 6, **caractérisé en ce qu'**au cours de l'étape c) on fait tourner la griffe de broche (31) de 90°.
